# EUROPEAN PATENT APPLICATION

(11) **EP 2 910 807 A2**
(43) Date of publication of application: **26.08.2015**
(21) Application number: 15155484.7
(22) Date of filing: 17.02.2015
(51) Int. Cl.: F16D 7/02

(54) **Torque limiting axle assembly**

(30) Priority: 21.02.2014 US 201414186093
(71) Applicant: Sypris Technologies, Inc., Louisville, Kentucky 40222 (US)
(72) Inventor: Straub, Stephen W., Louisville, Kentucky 40245 (US); Maled, Patrick T., New Albany, Indiana 47150 (US); McGeeney, John R., Louisville, Kentucky 40204 (US)
(74) Representative: Giles, Ashley Simon

(57) **Abstract**

An axle assembly includes an axle (12) in frictional driving engagement with a wheel hub (32). A torque limiting assembly limits the amount of torque that can be transmitted between the axle (12) and hub (32). The torque limiting assembly includes an arm or rod, such as the shaft of a bolt (70), which biases the axle (12) and hub (32) together to provide a predetermined slipping torque. The rod or arm is housed in a clamp (50) which extends axially over the outer peripheries of an axle flange (40) and a hub flange (14).

## Description

### BACKGROUND OF THE INVENTION

This invention relates in general to vehicle axles and more particularly to wheel drive axles.

Axle shafts are used to transfer power from the driving members of an automotive vehicle to the driven members, such as from the differential to a drive wheel. Axle shafts, particularly for automotive vehicles, typically are formed of solid metal shafts with their opposite ends formed for connecting to the drive and driven members of the vehicle. For example, a flange may be forged or welded onto one end of the shaft for connection to a wheel hub, while the opposite end of the shaft may be provided with a spline for connection to a differential gear.

Axle shafts must transmit considerable torque and are subjected to rapid starts and stops of power transmission and occasional shock loads. Consequently, axle shafts are designed to perform under both normal conditions and overload or over torque conditions in which extreme torque is applied, typically as a brief, rapid spike in load levels. Axle damage such as fractures can occur in an axle shaft which has not been designed to be handle overload conditions. Unfortunately, axle shafts which are overdesigned to handle shock loads and other extreme torque conditions add undesirable weight and cost.

It would be desirable to provide a simple axle assembly which will transmit torque under predefined "normal" conditions, but which would not fracture under predefined overload conditions.

### SUMMARY OF THE INVENTION

The present invention relates to an axle assembly including an axle shaft having a radially extending flange in direct or indirect frictional engagement with a wheel hub assembly. A torque limiting assembly limits the amount of torque that can be transmitted between the axle shaft and hub assembly. The torque limiting assembly includes a mechanism, such as a rod or the shaft of a bolt, which biases the axle and hub assembly together. This allows frictional torque transfer from the axle shaft to the hub assembly, while providing a predetermined slipping torque which allows the axle shaft and hub assembly to disconnect when the predetermined frictional force is overcome.

The drive between the axle shaft and hub assembly may include components between the axle shaft and hub which slip under a predetermined torque, or directly between a hub assembly flange frictionally engaged with an axle shaft flange. The hub flange may be integrally formed with the hub body or provided on a mounting plate that is separately attached to the hub body. The biasing mechanism is housed in a clamp that extends axially over the outer peripheries of the axle flange and hub flange. Preferably, the clamp has radially inwardly extending legs that respectively engage the axle flange and hub flange. For optimum balance, the clamp may have at least two sections which together surround the axle flange and hub flange throughout their circumferential peripheries.

The present invention protects the axle shaft under overload conditions, and allows the axle shaft to remain fully functional, reusable and undamaged. Various aspects of this invention will become apparent to those skilled in the art from the following detailed description of the preferred embodiments, when read in light of the accompanying drawings.

### BRIEF DESCRIPTION OF THE DRAWINGS

Figure 1 is a perspective view of one embodiment of the axle assembly of the present invention.
Figure 2 is an exploded perspective view of the axle assembly of Figure 1.
Figure 3 is cross-sectional view of a portion of the axle assembly taken along line 3-3 of Figure 1.
Figure 4 is a cross-sectional view of an alternative embodiment of the present invention.
Figure 5 is cross-sectional view of a second alternative embodiment of the present invention.
Figure 6 is cross-sectional view of a third alternative embodiment of the present invention.
Figure 7 is cross-sectional view of a fourth alternative embodiment of the present invention.
Figure 8 is cross-sectional view of an alternative bolt assembly of the present invention.
Figure 9 is cross-sectional view another alternative bolt assembly of the present invention.

### DETAILED DESCRIPTION OF PREFERRED EMBODIMENTS

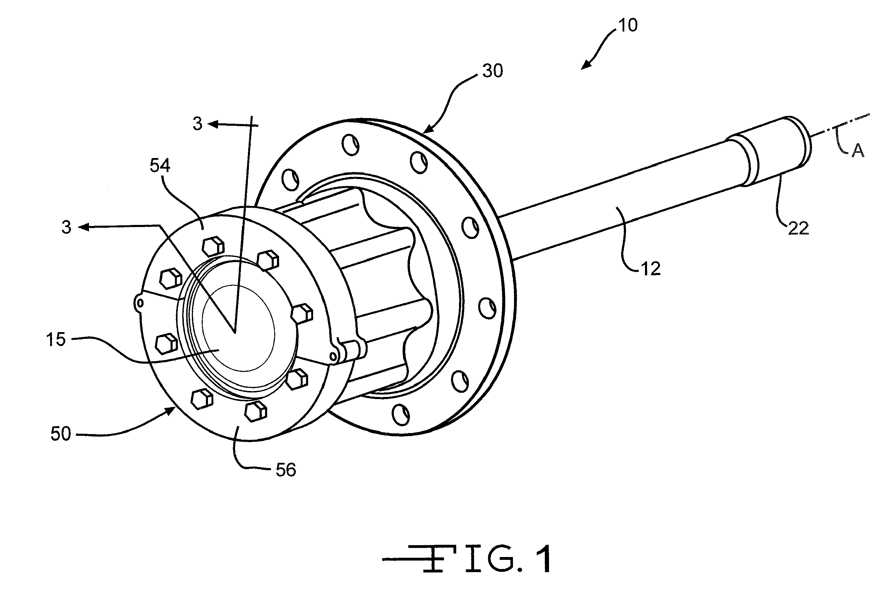

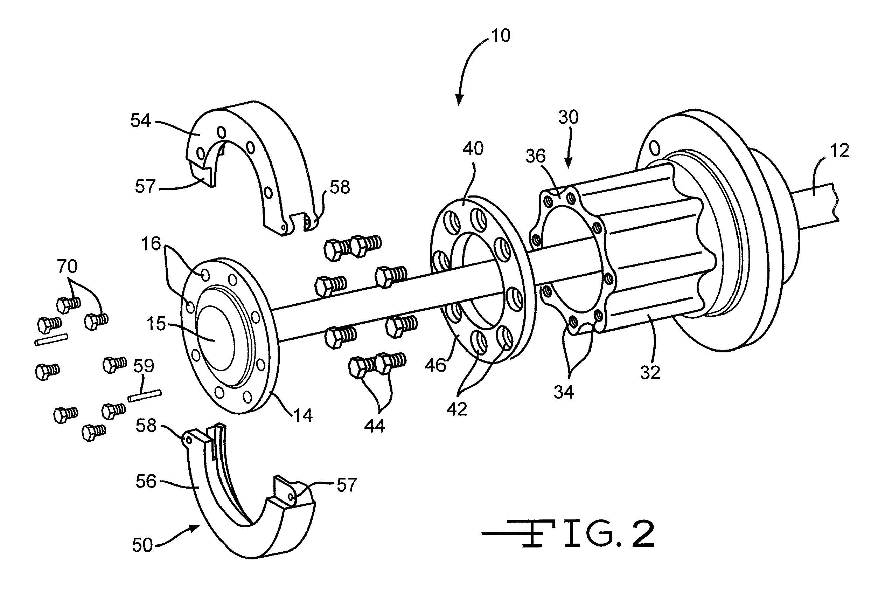

Referring to Figures 1 and 2, a vehicle axle assembly 10 for a heavy duty truck includes a standard steel axle shaft 12. The shaft 12 has an inboard spline end portion 22 for driving connection with a differential device, as is well known in the art. A wheel drive flange 14 is provided on the outboard end portion of the shaft 12. The flange 14 may be forged onto the end of the shaft or attached through a process such as friction welding. A center section 15 may protrude axially outwardly from the flange 14. The flange 14 includes bolt holes 16 which typically are used to facilitate attachment of the shaft to a wheel hub assembly 30. From the descriptions below, it will be apparent that the present invention eliminates the need for bolt holes 16. However, the present invention may be used as a retrofit device with currently used axle shafts having holes 16, as will be explained.

The wheel hub assembly 30 includes a standard cast iron, aluminum or alloy wheel hub body 32. The axle shaft 12 extends along a longitudinal and rotational axis "A" through the hub assembly 30. The hub body 32 has a front face 36 that may or may not include threaded holes 34. In a typical axle assembly, studs extend through the axle shaft flange holes 16 into the hub body threaded holes 34 to drivingly and rigidly secure the axle flange 14 using nuts attached to the studs, and thus the axle shaft 12, to the hub assembly 30.

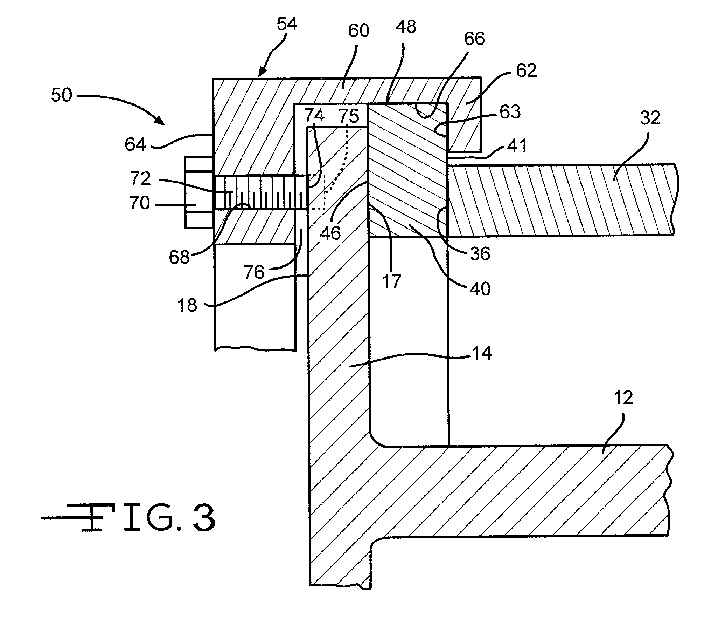

The embodiment of the present invention shown in Figures 1-3 can be used with a standard axle flange 14 and hub assembly 30 as shown, either as original equipment or as a retrofit. A mounting plate 40 has a back face 41 (Figure 3) which abuts against a front face 36 of the hub body 32. The mounting plate 40 has a plurality of bolt holes 42 which align with the hub bolt holes 34. The mounting plate 40 is made of steel or other materials which may optimize cost, weight and frictional characteristics. At the front face 46 of the mounting plate 40, the bolt holes 42 are countersunk. The mounting plate 40 is drivingly and rigidly secured to the hub body 30 with hex head bolts 44. The mounting plate bolt holes 42 are countersunk to a depth at least as great as the height of the hex heads of bolts 44 to allow frictional engagement of the mounting plate face 46 with the axle shaft flange 14 as will be described herein.

A torque limiting device includes a two-piece steel clamp 50 having first 54 and second 56 sections. Each clamp section 54, 56 is arcuate with mating hinge sections 57, 58 provided on opposite ends of each section. The clamp sections 54, 56 are generally identical. Pins 59 secure the hinge sections together so that the clamp sections 54, 56 form an annular clamp 50. While an annular shaped clamp 50 is preferred to distribute forces evenly, a clamp extending around less than the entire outer circumferential periphery of the axle flange could be used, although such a clamp may require additional parts to be rotationally secured.

Referring to Figure 3, each clamp section 54, 56 includes a bridge portion 60 from which a first clamp leg 62 extends radially inwardly. The first leg 62 includes an inside face 63 in frictional engagement with the back face 41 of the mounting plate 40. A second clamp leg 64 extends radially inwardly from the bridge portion 60. The second clamp leg 64 includes threaded bolt holes 68. Bolts 70 are threaded into and through the holes 68 and into engagement with the outer face 18 of the axle shaft flange 14. Bolts 70 have a shaft or rod portion 72 which is in contact with the axle flange outer face 18. The shaft or rod portions 72 of the bolts 70 engage the face 18 with a generally flat surface 74, but any shape which will transmit force to the face 18 may be used. If a standard axle shaft is used, bolt holes 68 should be on a different bolt circle than that of the axle shaft flange holes 16. It is also feasible to have bolt holes 68 on the same bolt hole circle as flange holes 16, but the holes 68 should be circumferentially spaced from the holes 16 to engage the flange surface 18. This arrangement is feasible but not preferred because slippage of the flange may cause the bolts 70 to engage and lock in the bolt holes 16, thereby preventing further slipping in an over torque situation. Alternatively, axle flange surface 18 may be provided with blind holes such as 75 (shown in phantom) into which the bolt shafts 72 extend to circumferentially lock the clamp sections to the axle shaft, the clamp becoming part of the axle shaft assembly, with any slipping occurring between the axle flange surface 17 and the mounting plate surface 46.

The radially inner surface 66 of the clamp bridge section 60 is centered or piloted on the radially outer surface 48 of the mounting plate 40. Of course, the axle assembly could easily be designed so that the axle flange 14 has a diameter larger than the mounting plate 40 so that the clamp 54 would be piloted on the axle flange 40 instead. In addition, the axle flange and mounting plate could have equal diameters so the clamp 54 would be piloted on both the axle flange and mounting plate.

When the torque limiting device is installed on the axle assembly, bolts 70 are tightened a predetermined amount such that the bolts create a predetermined frictional force between the axle flange 14 and the mounting plate 40. In a typical heavy truck application, with two clamp sections 54, 56 and eight bolts 44, the coefficient of friction would be approximately 0.2 and the torque of each bolt would be about 120 ft-lbs to about 300 ft-lbs. The bolts may be locked in place at the predetermined torque with lock washers, adhesives, etc. A small annular gap 76 will exist between the surfaces of the axle flange and the mounting plate.

In operation, when torque from the axle shaft to the wheel hub exceeds a predetermined amount, depending on the torque applied from the bolts 70 to the axle shaft flange 14, slippage will occur between the hub assembly and the axle shaft, specifically between the inner face 15 of axle shaft flange 14 and outer face 46 of mounting plate 40. It is contemplated that the torque limit would be high enough that slippage would occur only in rare instances, and never during vehicle braking. It may be advisable to check or reset the bolt torque after a slippage event.

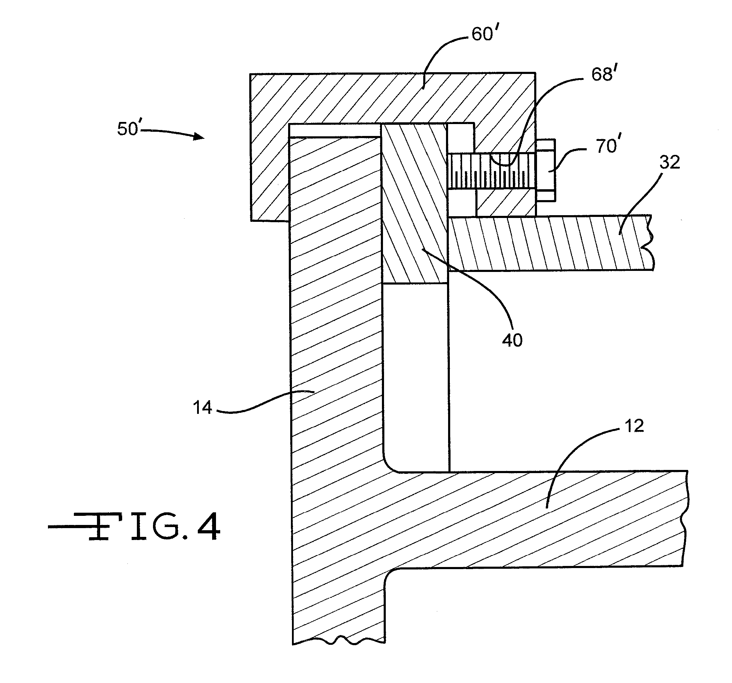

Figure 4 shows an alternative embodiment of the present invention. The axle shaft 12, axle shaft flange 14, hub body 32 and mounting flange 40 are identical to the corresponding components of the Figure 1 embodiment. The torque transmitting device 50' is reversed from that of the Figure 1 embodiment. Bolts 70' are threaded into threaded holes 68' in the clamp 60' to engage the mounting plate 40 rather than the axle flange 14. All other aspects of the Figure 1 embodiment are the same. This alternative embodiment allows the bolts 70' to be positioned more toward the interior of the axle assembly. A standard axle flange with bolt holes 16 also can be used with this embodiment in a retrofit application, with standard bolt holes 16 being redundant. In this embodiment, the clamp can be considered part of the hub assembly.

The embodiment of Figures 1-3 is applicable to typical standard axles and hubs, thereby allowing the present invention to be used without redesigning currently used components. Because typical hubs do not include an appropriate friction surface, a mounting plate such as 40 is required. However, the present invention could be made without such a mounting plate 40 if the hub body is redesigned.

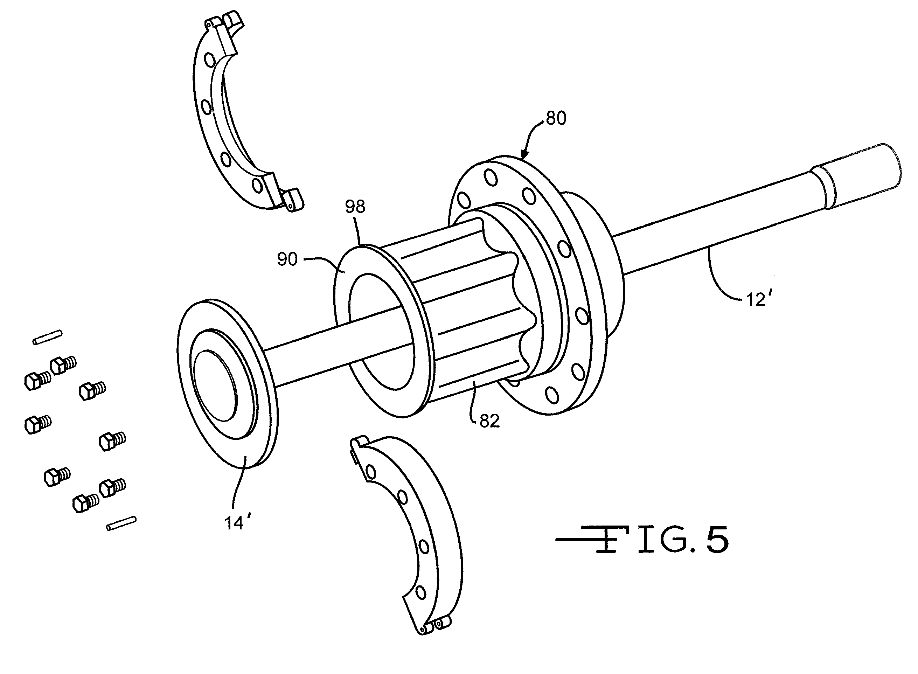

Figure 5 shows an alternative hub assembly and axle shaft which may be used any of the embodiments of the present invention. An axle shaft 12' has an integral flange 14' without threaded bolt holes (such as bolt holes 16 of Figure 1 embodiment). The hub assembly 80 has a hub body 82 including an integral radially outwardly extending flange 90. The flange 90 is suitable for frictional engagement with the axle flange 14 of the previously described embodiments. The flange 90 is integrally and irremovably attached to the hub body 82, such as by friction welding, MIG welding, etc. It may also be feasible to cast the flange 90 together with the hub body 82 with certain hub designs. The flange 90 has an outer circumferential periphery 98 which engages the inner clamp surface 66 to position the clamp 54.

The flange 90 replaces the mounting plate 40 of the previously described embodiments. All other components of the previously described hub assemblies are the same, except that the bolts 44 to secure the mounting plate 40 to the hub body 32 and the threaded bolt holes 34 in the hub body are eliminated. While this embodiment eliminates the separate mounting plate 40, bolts 44, and the threaded bolt holes 34, it requires a modified hub which the previously described embodiments allow the use of hub designs which are currently used, either as an original equipment design or as an aftermarket add-on.

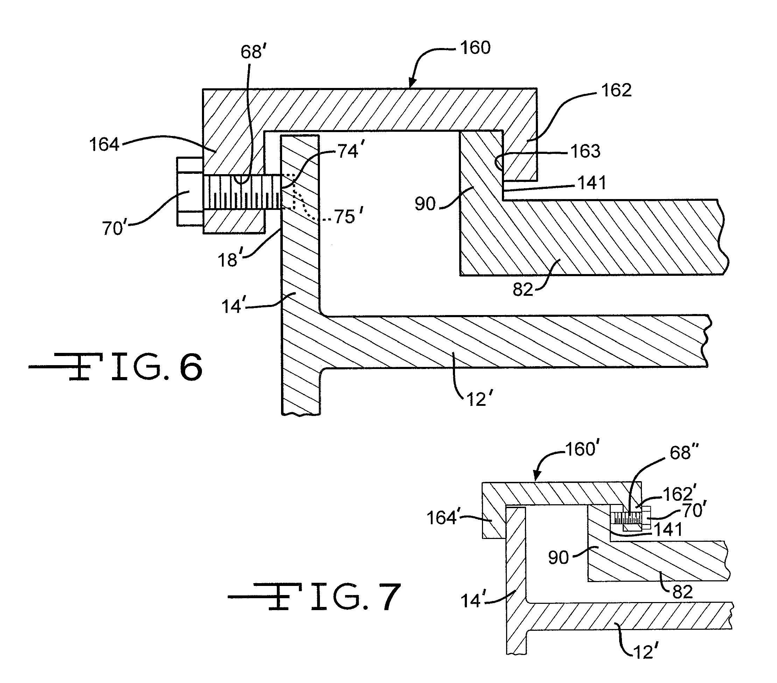

Figure 6 shows an alternative embodiment in which the axle shaft 12' drives the hub flange 90 through the clamp 160. In this embodiment, the clamp 160 and clamp bolts 70' are considered to be part of the axle shaft 12'. The inner surface 163 of clamp leg 162 frictionally engages the inner surface 141 of the hub flange 90, and the flat outer surface 18' of the axle flange 14' frictionally engages the flat end surfaces 74' of bolts 70' (only one of which is shown in Figure 6). Bolts 70' are threaded into threaded holes 68' in the outside clamp leg 164. In this embodiment, upon a predetermined over torque condition, slippage will occur between the flat bolt end surface 74' and the flat flange surface 18'. However, if the flange surface 18' is provided with bolt detents or indentations such as 75' (shown in phantom), the bolts will be circumferentially locked to the flange 14' and slippage will occur between the clamp surface 163 and hub surface 141. Detents or similar surface structures such as 75' would alleviate any possible gouging of the axle flange surface 18' by the bolt surface 74' upon slipping of the clamp.

Figure 7 shows an alternative embodiment similar to that of Figure 6 in which the axle shaft 12' drives the hub flange 90 through the clamp 160'. The clamp 160' and clamp bolts 70' are considered to be part of the axle shaft 12'. In this embodiment, clamp leg 164' frictionally engages the axle shaft flange 14'. Clamp leg 162' has threaded holes 68" receiving bolts 70' (only one of which is shown in Figure 7). The bolts 70' engage the inner surface 141 of the hub flange 90. Slippage will occur between the bolt 70' and the hub flange surface 141 unless the surface 141 is provided with detents, indentations or a similar feature to circumferentially lock the bolts to the hub flange 90 as previously explained. A standard axle flange 12 (Figure 2) with bolt holes 16 also can be used with this embodiment in a retrofit application, with standard bolt holes 16 being redundant.

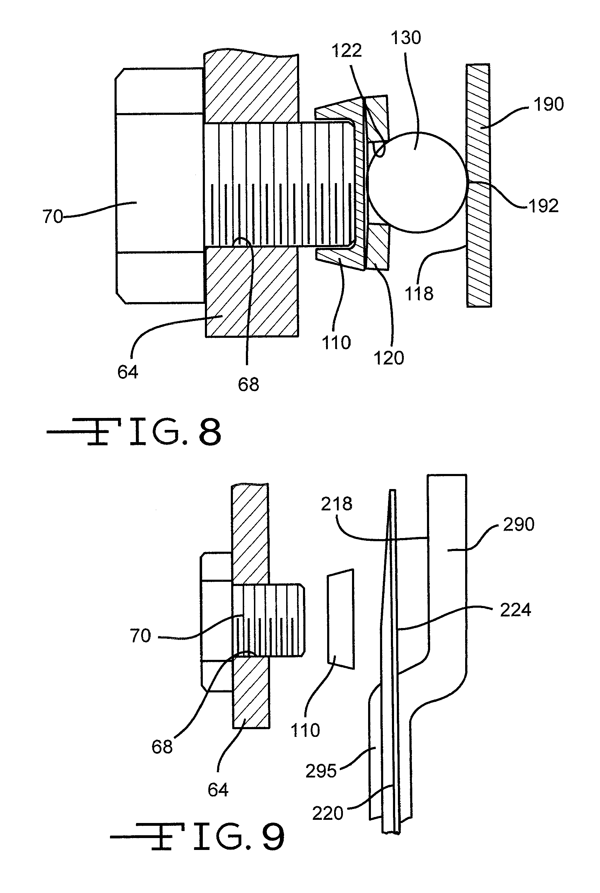

Figure 8 shows an alternative bolt assembly which can be used with any embodiment of this invention with the exception of standard axle shafts containing thru holes. While Figure 8 shows only one bolt assembly, it should be understood that similar bolt assemblies would be arranged around the circumference of the axle flange as with other embodiments of this invention. Bolt 70 is threaded into the threaded hole 68 in the clamp leg 64. Instead of directly engaging the axle shaft flange 190, bolt 70 engages the axle shaft flange through a ball and spring assembly. A bolt footer 110 caps the end of the bolt 70 and engages a Belleville spring washer 120. The bolt footer 110 may be net form forged or forged and machined from steel or other materials. A ball bearing 130 is seated in the annular opening 122 of the Belleville spring. The ball 130 is spaced from the footer 110 so that forces from the footer to the ball must be transmitted by the spring washer 120. The footer 110 has substantially the same outer diameter as the spring washer 120 to optimize the transfer of forces from the footer 110 to the spring washer 120. The size, thickness and spring force of the spring washer 120 may vary depending on the desired limit of torque to be transmitted between the axle and hub assembly. Of course, two or more stacked spring washers 120 may be used with each bolt 70, depending on the torque limit and axle design.

The ball bearing 130 engages the outer face 118 of the axle flange 190. The axle flange 190 is provided with circumferentially spaced detents 192 for seating a circumferentially spaced series of ball bearings 130. The detents may be provided during the axle shaft forging process, or later machined into the axle shaft flange. If a standard axle shaft 12 (Figure 2) is used, the bolt holes 68 preferably are on a larger bolt circle than the bolt holes 16. However, bolt holes 16 of a traditional axle shaft flange could also be used as detents 192 with appropriately sized ball bearings. When a predetermined torque is exceeded between the axle shaft and hub assembly, the spring 120 is compressed and the ball bearing 130 will be forced out of the axle flange detent 192 and roll or slide along the surface of the axle flange. This will allow the axle to rotate independently of the hub assembly until the overload condition ceases and an acceptable level of torque is reached. At that point, the ball 130 will reseat in another detent 192. This arrangement alleviates gouging of the axle shaft flange surface 118 and allows the vehicle operator to immediately regain functionality after an overload event.

Figure 9 shows another embodiment of a bolt assembly which may be used with any embodiment of this invention. Circumferentially spaced bolts 70 (only one shown in Figure 9) are threaded into the threaded holes 68 in the clamp leg 68. A bolt footer 110 caps the end of each bolt 70. A Belleville spring washer 220 having a diameter substantially as large as the diameter of the axle flange 290 is piloted on the axle flange center section 295. The size, thickness and spring force of the spring washer 220 may vary depending on the desired limit of torque to be transmitted between the axle and hub assembly. Of course, two or more stacked spring washers may be used to achieve the desired deflection and spring load.

The footer 110 of each bolt 70 engages the Belleville spring washer 220. A predetermined amount of torque is applied to the bolts 70 which substantially flattens the spring washer 220 and creates an annular pattern of frictional engagement between the inner surface 224 of the spring washer 220 with the outer surface 218 of the axle flange. When a predetermined over torque condition occurs, the spring washer 220 will slip against the axle flange surface 218 until the predetermined level of torque falls below the predetermined level, at which point the axle will drive the hub assembly.

The surface of the footer 110 which engages the spring 220 is flat to engage the spring surface when it is flattened under force, but in some circumstances, it may be desirable to allow the spring 220 to maintain a slightly frusto-conical shape, and to contour the engaging surface of the footer 110 to match that configuration. In addition, it may be desirable to utilized ball bearings between the spring washer 220 and the axle flange 290, with ball bearings engaging detents in the outer surface 218 of the axle flange. A standard axle shaft 12 having bolt holes 16 could be used with this embodiment without modification.

### STATEMENTS

Additional Statements of Invention are set out below.
Statement 1. An axle assembly comprising an axle shaft having a radially extending flange, a hub in frictional engagement with the axle flange, and a torque limiting assembly to provide a predetermined slipping torque between the axle flange and the hub, the torque limiting assembly including a rod biasing the axle flange and hub together.
Statement 2. An axle assembly as defined in statement 1 wherein the axle shaft flange is integrally formed with the axle shaft.
Statement 3. An axle assembly as defined in statement 1 or 2 wherein the hub comprises a hub body, the hub body including a radially extending annular hub flange coaxial with and in frictional engagement with the axle flange.
Statement 4. An axle assembly as defined in statement 3 wherein the hub flange is integral with the hub body.
Statement 5. An axle assembly as defined in statement 3 or 4 wherein the hub further comprises a mounting plate rigidly secured to the hub body, wherein the mounting plate comprises the hub flange.
Statement 6. An axle assembly as defined in statement 5 wherein the mounting plate comprises a radially extending friction face in frictional engagement with the axle shaft flange, and wherein the mounting plate is attached to the hub body by bolts, and wherein the friction face of the mounting plate has countersunk bolt holes.
Statement 7. An axle assembly as defined in any preceding statement wherein the torque limiting assembly further comprises a clamp which houses the rod, the clamp having a first leg, the first leg comprising a radially extending surface in engagement with one of the axle shaft flange and the hub, wherein the rod is in engagement with the other of the axle shaft flange and the hub.
Statement 8. An axle assembly as defined in any preceding statement wherein the rod is in engagement with the axle flange.
Statement 9. An axle assembly as defined in any preceding statement when appendent to claim 7 wherein the rod comprises a bolt threaded into the clamp.
Statement 10. An axle assembly as defined in any preceding statement when appendent to claim 7 wherein the clamp comprises a second leg, the second leg comprising a radially extending surface and a threaded hole for housing the bolt.
Statement 11. An axle assembly as defined in statement 10 wherein the clamp further comprises a bridge portion connecting the first and second radially extending legs.
Statement 12. An axle assembly as defined in any preceding statement when appendent to claim 7 wherein the clamp comprises a first section that extends circumferentially partially around the outer periphery of the axle shaft flange.
Statement 13. An axle assembly as defined in statement 12 wherein the clamp comprises a second section which extends circumferentially partially around the outer periphery of the axle shaft flange, wherein the clamp first and second sections are connected to surround the outer periphery of the axle shaft flange.
Statement 14. An axle assembly as defined in statement 13 wherein one of the first clamp section legs comprises a plurality of threaded holes, each threaded hole housing a bolt engaging one of the axle shaft flange and hub, and wherein one of the legs of the second clamp section comprises a plurality of threaded holes, each hole housing a bolt, the bolts engaging the one of the axle shaft flange and hub.
Statement 15. An axle assembly as defined in statement 14 further comprising pins which connect the circumferential ends of the clamp sections to each other.
Statement 16. An axle assembly as defined in any preceding statement further comprising a spring positioned to be driven by the rod.
Statement 17. An axle assembly as defined in statement 16 further comprising a ball bearing positioned to be driven by the spring, and wherein one of the axle flange or hub has a detent, and wherein the ball bearing is seated in the detent.
Statement 18. An axle assembly as defined in statement 16 or 17 wherein the spring has a diameter substantially as large as the diameter of one of the axle flange, and wherein the spring is piloted on the axle flange.
Statement 19. An axle assembly comprising an axle shaft having a radially extending flange, a hub assembly having a radially extending flange, a friction assembly including an axially extending rod, the friction assembly in frictional engagement with the axle shaft flange and the hub assembly flange, the rod being axially movable into engagement with one of the axle shaft flange and the hub assembly flange to provide a slipping torque between the axle shaft flange and the hub assembly.
Statement 20. An axle assembly comprising:
   an axle shaft having a radially extending flange,
   a hub assembly having a radially extending flange, and
   a clamp assembly having (a) a first radially extending leg positioned adjacent the axle shaft flange, (b) a second radially extending leg axially spaced from the first radially extending leg and positioned adjacent the hub assembly flange, and (c) a rod connected to the first clamp leg, the rod biasing the axle shaft flange or the hub assembly flange into frictional engagement with each other or with the second clamp leg.

The principle and mode of operation of this invention have been explained and illustrated in the preferred embodiments. However, this invention may be practiced otherwise than as specifically explained and illustrated without departing from its spirit or scope as defined in the following claims.

## Claims

1. An axle assembly comprising an axle shaft having a radially extending flange, a hub in frictional engagement with the axle flange, and a torque limiting assembly to provide a predetermined slipping torque between the axle flange and the hub, the torque limiting assembly including a rod biasing the axle flange and hub together.

2. An axle assembly as defined in claim 1 wherein the axle shaft flange is integrally formed with the axle shaft.

3. An axle assembly as defined in claim 1 or 2 wherein the hub comprises a hub body, the hub body including a radially extending annular hub flange coaxial with and in frictional engagement with the axle flange.

4. An axle assembly as defined in claim 3 wherein the hub flange is integral with the hub body.

5. An axle assembly as defined in claim 3 or 4 wherein the hub further comprises a mounting plate rigidly secured to the hub body, wherein the mounting plate comprises the hub flange.

6. An axle assembly as defined in claim 5 wherein the mounting plate comprises a radially extending friction face in frictional engagement with the axle shaft flange, and wherein the mounting plate is attached to the hub body by bolts, and wherein the friction face of the mounting plate has countersunk bolt holes.

7. An axle assembly as defined in any preceding claim wherein the torque limiting assembly further comprises a clamp which houses the rod, the clamp having a first leg, the first leg comprising a radially extending surface in engagement with one of the axle shaft flange and the hub, wherein the rod is in engagement with the other of the axle shaft flange and the hub.

8. An axle assembly as defined in any preceding claim wherein the rod is in engagement with the axle flange.

9. An axle assembly as defined in any preceding claim when appendent to claim 7 wherein the rod comprises a bolt threaded into the clamp.

10. An axle assembly as defined in any preceding claim when appendent to claim 8 wherein the clamp comprises (a) a second leg, the second leg comprising a radially extending surface and a threaded hole for housing the bolt, (b) a bridge portion connecting the first and second radially extending legs, (c) a first section that extends circumferentially partially around the outer periphery of the axle shaft flange, (d) a second section which extends circumferentially partially around the outer periphery of the axle shaft flange, wherein the clamp first and second sections are connected to surround the outer periphery of the axle shaft flange, wherein one of the first clamp section legs comprises a plurality of threaded holes, each threaded hole housing a bolt engaging one of the axle shaft flange and hub, and wherein one of the legs of the second clamp section comprises a plurality of threaded holes, each hole housing a bolt, the bolts engaging the one of the axle shaft flange and hub, the axle assembly further comprising pins which connect the circumferential ends of the clamp sections to each other.

11. An axle assembly as defined in any preceding claim further comprising a spring positioned to be driven by the rod.

12. An axle assembly as defined in claim 11 further comprising a ball bearing positioned to be driven by the spring, and wherein one of the axle flange or hub has a detent, and wherein the ball bearing is seated in the detent.

13. An axle assembly as defined in claim 11 or 12 wherein the spring has a diameter substantially as large as the diameter of one of the axle flange, and wherein the spring is piloted on the axle flange.

14. An axle assembly comprising an axle shaft having a radially extending flange, a hub assembly having a radially extending flange, a friction assembly including an axially extending rod, the friction assembly in frictional engagement with the axle shaft flange and the hub assembly flange, the rod being axially movable into engagement with one of the axle shaft flange and the hub assembly flange to provide a slipping torque between the axle shaft flange and the hub assembly.

15. An axle assembly comprising:
an axle shaft having a radially extending flange,
a hub assembly having a radially extending flange, and
a clamp assembly having (a) a first radially extending leg positioned adjacent the axle shaft flange, (b) a second radially extending leg axially spaced from the first radially extending leg and positioned adjacent the hub assembly flange, and (c) a rod connected to the first clamp leg, the rod biasing the axle shaft flange or the hub assembly flange into frictional engagement with each other or with the second clamp leg.
